# FASCICULE DE BREVET EUROPEEN

(11) **EP 1 799 339 B1**
(45) Date de publication et mention de la délivrance du brevet: **13.03.2013**
(21) Numéro de dépôt: 05798343.9
(22) Date de dépôt: 12.08.2005
(51) Int. Cl.: B01J 8/00, C10G 11/18, B01F 3/18, B01F 5/04

(54) **PROCEDE DE REMPLISSAGE D'UNE ENCEINTE AVEC UN LIT DE PARTICULES A DENSITE VARIABLE**
VERFAHREN ZUM FÜLLEN EINER KAMMER MIT EINEM BETT AUS TEILCHEN VARIABLER DICHTE
METHOD FOR FILLING A CHAMBER WITH A BED OF VARIABLE DENSITY PARTICLES

(30) Priorité: 19.08.2004 FR 0408985
(43) Date de publication de la demande: 27.06.2007
(73) Titulaire: Petroval, 76430 St Romain de Colbosc (FR)
(72) Inventeur: HAQUET, Yvon, F-76490 Saint Arnoult (FR); GALLIOU, Pauline, F-38150 Chanas (FR); DUFRESNE, Pierre, F-26000 Valence (FR)
(74) Mandataire: Largeau, Béatrice
(86) Numéro de dépôt international: PCT/FR2005/002084
(87) Numéro de publication internationale: WO 2006/021687

(56) Documents cités:
- EP-A- 1 057 524
- WO-A-93/11863
- FR-A- 1 190 545
- US-A- 4 690 804

## Description

La présente invention concerne un procédé de remplissage d'une enceinte avec un solide particulaire, permettant de moduler la densité du lit de particules déposées.

L'invention concerne plus particulièrement le chargement des réacteurs à lit fixe de type chimique ou électrochimique, pétrolier ou pétrochimique, avec des particules solides à l'état divisé, qui peuvent se présenter sous forme de billes, de grains, de cylindres, de pastilles, de bâtonnets, ou de toute autre forme, mais de dimensions relativement faibles. Les particules peuvent être en particulier des tamis moléculaires ou des catalyseurs sous forme de billes, de pastilles, ou le plus souvent sous forme d'extrudés, de type mono- ou multilobes, dont les dimensions varient selon les cas, de quelques dixièmes de millimètres à quelques centimètres.

C'est à cette application que l'on se référera plus particulièrement dans la suite de la présente description, mais le procédé conforme à l'invention s'applique au chargement de tout autre type de particules solides dans une enceinte, dans laquelle il est nécessaire de moduler, à la demande, la densité du lit de particules chargées.

Dans le domaine du chargement des réacteurs chimiques à lit fixe avec des particules solides de catalyseur, on distingue principalement deux techniques de remplissage, à savoir :
- la technique classique, désignée généralement par le terme anglais *sock loading*, consistant à introduire, en haut du réacteur, les particules de catalyseur dans l'extrémité supérieure d'une manche, généralement souple, afin de les déposer par gravité, par l'autre extrémité de cette même manche, au fond du réacteur, puis sur le lit fixe en cours de formation, et
- la technique de chargement dense qui consiste à introduire les particules de catalyseur également par le haut du réacteur, puis à les disperser pendant leur chute par un moyen généralement mobile et contenant des déflecteurs appropriés, situé dans la partie supérieure de l'enceinte, de manière à les faire tomber individuellement par « effet de pluie » sur le front de chargement où elles se positionnent librement.

Les lits de catalyseurs ainsi obtenus sont chargés de façon non dense et non homogène avec la technique de remplissage du type sock *loading* alors que le chargement est dense et homogène quand le procédé de remplissage est à effet de pluie.

Des dispositifs et procédés permettant un chargement à effet de pluie des réacteurs chimiques à lits fixes sont décrits, par exemple, dans les demandes EP007854, EP116246, EP769462, EP482991, FR2766386 et FR2721900.

Les différentes techniques de chargement à effet de pluie habituellement utilisées présentent l'avantage d'utiliser de manière optimale l'espace disponible à l'intérieur de l'enceinte, en permettant d'introduire dans un volume de réacteur donné, une quantité de catalyseur pouvant aller jusqu'à 20 % de plus qu'avec la technique de chargement classique (*sock loading*).

La grande homogénéité des lits catalytiques fixes chargés de façon dense est obtenue par une répartition très régulière des particules de catalyseur, favorisant un écoulement et une cinétique réactionnelle homogènes dans l'ensemble du volume du lit catalytique, alors que la technique classique de chargement à l'aide d'une manche (*sock loading*) aboutit souvent à la formation de chemins de passages préférentiels du milieu réactionnel qui sont à l'origine d'une réduction du rendement du réacteur. Les lits de catalyseurs denses présentent en outre l'avantage de se tasser très peu tout au long de leur durée de fonctionnement, ce tassement ne dépassant généralement pas 1 à 2 % de la hauteur du lit catalytique, alors qu'il peut atteindre 8 à 10 % pour un chargement classique, c'est à dire de type *sock loading.*

Bien que les techniques de chargement dense représentent actuellement une part importante du marché, leur généralisation a jusqu'ici été freinée par le fait que les lits haute densité présentent une perte de charge (ΔP) relativement plus importante que les lits fixes non denses de hauteur équivalente. Il en résulte que, dans un tel lit haute densité, le débit du milieu réactionnel pour une pression donnée est plus faible que dans un lit non dense, ou inversement, pour l'obtention d'un débit réactionnel identique, il est alors nécessaire d'appliquer une pression plus importante. De plus, une des caractéristiques des techniques de chargement dense est que la densité obtenue est fatale, ne dépendant essentiellement que des caractéristiques géométriques et de l'état de surface des grains de catalyseur, c'est à dire sans contrôle possible par les réglages des dispositifs et procédés utilisés.

L'homme du métier devait donc choisir jusqu'ici entre, d'une part, des lits de catalyseur non denses souffrant d'un défaut d'homogénéité et d'un tassement important du lit au cours du temps, et des lits de catalyseur denses homogènes permettant, certes, d'excellents rendements réactionnels, mais présentant une perte de charge (ΔP) sensiblement plus importante.

FR 2812824 propose un procédé de chargement à effet de pluie dans un liquide contenu dans l'enceinte à charger, permettant d'obtenir ainsi un chargement homogène et non dense. Malheureusement, le dit liquide, qui doit être inerte vis-à-vis des particules à charger, n'est pas toujours disponible sur le site de chargement ou les propriétés physico-chimiques spécifiques desdites particules ne permettent pas leur immersion dans un liquide.

Il existait donc une demande pour un procédé de remplissage de réacteurs à lit de catalyseur fixe permettant l'obtention de lits catalytiques à la fois homogènes et relativement peu denses.

Dans le cadre de ses recherches visant à améliorer les procédés connus de chargement de réacteurs, la Demanderesse a mis au point un nouveau procédé de remplissage permettant d'obtenir des lits de catalyseur homogènes ayant une densité comprise entre celle des lits denses et celle des lits non denses (obtenus par *sock loading*). Ce nouveau procédé est un procédé de chargement utilisant un « diluant solide », à savoir un matériau solide granulaire introduit dans le réacteur en même temps que le catalyseur et qui sera éliminé avant ou lors du démarrage du réacteur, par simple dissolution avec un solvant approprié, ledit solvant pouvant être constitué directement par la charge réactive. La densité finale du lit catalytique sera d'autant plus faible que la quantité de diluant solide, éliminée avant ou lors du démarrage du réacteur, sera importante. On pourra donc ajuster cette densité finale du lit en modifiant la proportion de diluant solide introduit avec le catalyseur.

La présente invention a par conséquent pour objet un procédé pour remplir une enceinte, notamment un réacteur chimique, avec un matériau solide granulaire à une densité de chargement modulable, comprenant les étapes suivantes consistant
(a) à remplir ladite enceinte avec un mélange d'un premier matériau solide granulaire (A) et d'un diluant solide (B) qui est un deuxième matériau solide granulaire ayant des propriétés de solubilité différentes du premier matériau solide granulaire (A) et
(b) à éliminer la totalité du diluant solide (B) et à ne laisser dans l'enceinte que le premier matériau solide granulaire (A), en faisant passer par le lit fixe déposé dans l'étape (a) un solvant ayant un pouvoir dissolvant nul pour le premier matériau solide granulaire (A) et un pouvoir dissolvant élevé pour le second matériau solide granulaire (B).

Le procédé de remplissage de l'enceinte avec le mélange des deux matériaux solides (A et B) pourra utiliser la technique classique de chargement avec une manche (sock loading), mais utilisera de préférence la technique dite « à effet de pluie », consistant à déposer les grains de matériaux sur toute la surface du fond de l'enceinte, puis sur celle du lit catalytique en cours de formation. La technique de chargement à effet de pluie pourra utiliser un dispositif constitué d'un axe central tournant, plein ou creux, sur lequel sont disposées et également réparties à différents niveaux des lanières souples, par exemple en caoutchouc, qui s'écartent dudit axe suivant la vitesse de rotation de celui-ci.

Comme expliqué ci-dessus, ce procédé de chargement permet d'ajuster librement la densité du lit de catalyseur final à l'intérieur d'une gamme de densités donnée. Plus la proportion volumique du diluant solide (B) dans le mélange catalyseur solide granulaire (A) + diluant solide (B) est importante, moins la densité du chargement final sera élevée. L'homme du métier comprendra toutefois aisément que cette proportion de diluant solide (B) ne devra pas dépasser une certaine limite supérieure qui dépend en particulier de la forme des grains de catalyseur et du rapport de taille entre les grains de catalyseur et de diluant solide. En effet, au-delà d'une certaine proportion limite de diluant solide (B), le lit de catalyseur deviendra mécaniquement instable après dissolution du diluant solide, et se tassera globalement sous l'effet de la gravité ou du débit du milieu réactionnel, créant ainsi des chemins d'écoulement préférentiel indésirables.

La Demanderesse a constaté au cours de ses recherches que la proportion volumique de diluant solide (B) dans le mélange solide granulaire (A) + diluant solide (B) ne devrait généralement pas dépasser 20 à 30 %. On entend ici par « proportion volumique » le rapport du volume apparent du diluant solide (B) à la somme des volumes apparents du solide granulaire (A) et du diluant solide (B). Cette limite supérieure est proche de 20 % lorsque le solide granulaire (A) et le diluant solide (B) ont à peu près les mêmes dimensions et que la presque totalité des particules de diluant solide sert à l'espacement des grains de catalyseur. Par contre, lorsque le diluant solide a des dimensions nettement inférieures à celles du matériau solide granulaire, et qu'une certaine fraction des particules de diluant solide se trouve soit dans les pores ou cavités du catalyseur, soit dans les interstices entre les grains de catalyseur sans provoquer un espacement de ces grains, la proportion volumique limite peut être supérieure à 30%.

Par conséquent, dans le procédé de la présente invention, le taux de dilution du premier matériau solide granulaire (A) par le diluant solide (B), c'est-à-dire le rapport volumique V_{(A)}/(V_{(A)}+V_{(B)}) (avec V_{(A)} = volume apparent du solide granulaire (A), V_{(B)} = volume apparent du diluant solide (B)) dans le mélange de l'étape (a), est de préférence compris entre 1 % et 30 % en volume, plus préférentiellement entre 2 et 20 % en volume et en particulier entre 3 et 15 % en volume.

Le procédé de la présente invention est en principe applicable à n'importe quel matériau solide granulaire, et notamment aux catalyseurs granulaires pour lits catalytiques fixes utilisés couramment dans le domaine des procédés chimiques. Ces catalyseurs peuvent avoir n'importe quelle forme. Il peut s'agir par exemple de billes plus ou moins sphériques, de polyèdres, de cylindres pleins ou creux, d'objets allongés à section bi-, tri- ou polylobaire, mais également de grains ayant une forme aléatoire. Ces grains ont généralement un diamètre moyen compris entre 0,6 et 12 mm, de préférence entre 0,7 et 8 mm et en particulier entre 0,8 et 3 mm, le terme « diamètre » désignant ici la dimension la plus importante des grains. Dans le cas particulier où les grains ont la forme de bâtonnets, appelés « extrudés » par l'homme du métier, dont le diamètre est généralement compris entre 0,8 et 3 mm, leur longueur varie habituellement entre 2 et 4 mm et, plus particulièrement, entre 2,5 et 3,5 mm.

Bien que le procédé de la présente invention soit en principe applicable à n'importe quel type d'enceinte et de matériau solide granulaire, l'enceinte est de préférence un réacteur chimique à lit fixe, de forme généralement cylindrique, notamment un réacteur chimique fonctionnant à co-courant de charge à traiter et de fluide réactionnel, et le matériau solide est de préférence un catalyseur, notamment un catalyseur à base d'alumine et/ou de silice supportant un ou plusieurs métaux, tels que les catalyseurs pour l'hydrotraitement de charges hydrocarbonées, pour l'hydrocraquage, l'hydrofinissage, ou encore l'hydrogènation de telles charges.

Le procédé de la présente invention s'est avéré particulièrement intéressant dans le domaine des catalyseurs recyclés ou régénérés. En effet, ces catalyseurs subissent généralement au cours de leur première utilisation une importante réduction de taille qui peut limiter, voire interdire leur réutilisation dans des réacteurs remplis par un procédé à chargement dense. En effet, l'importante perte de charge (ΔP) d'un lit dense de grains de catalyseur ayant une longueur moyenne inférieure à 2,7 mm peut être inacceptable et le procédé de la présente invention pourra ainsi servir avantageusement à réduire la densité et donc la perte de charge des lits constitués de catalyseurs recyclés présentant des grains de faibles dimensions.

Dans un mode de réalisation préféré du procédé de l'invention, le solide granulaire est par conséquent un catalyseur recyclé ou régénéré ayant une longueur moyenne inférieure à 3,2 mm, et plus particulièrement à 2,7 mm.

Le diluant solide (B) utilisé dans le procédé selon l'invention peut être n'importe quel matériau granulaire, solide à température ambiante, et ayant des propriétés de solubilité suffisamment différentes de celles du matériau solide granulaire (A) pour pouvoir être facilement dissous par un non-solvant du matériau solide granulaire (A). L'homme du métier veillera bien entendu à choisir ce diluant solide parmi les composés qui ne modifient pas substantiellement l'activité et la sélectivité du catalyseur spécifique utilisé.

On peut citer à titre d'exemples de tels diluants solides appropriés, les hydrocarbures solides à température ambiante, en particulier les paraffines, les polymères synthétiques ou naturels, les sels organiques ou minéraux, les sucres monomères, oligomères ou polymères et des mélanges de ceux-ci. Dans un mode de réalisation préféré, le diluant solide est choisi de manière à pouvoir être dissous par le milieu réactionnel liquide. Le diluant solide peut ainsi être éliminé dans la phase de démarrage du réacteur et il ne sera pas nécessaire de mettre en oeuvre une étape d'élimination séparée.

Dans le domaine de l'hydrotraitement des hydrocarbures, le diluant solide est ainsi de préférence choisi parmi les molécules organosolubles telles que les paraffines et notamment les paraffines se présentant sous forme de gouttes.

La nature du solvant utilisé pour éliminer, dans l'étape (b) du procédé de la présente invention, le diluant solide (B) dépend de la nature chimique du diluant solide utilisé. Lorsque ce diluant est un sel ou un composé polaire, le solvant est de préférence un liquide polaire tel que l'eau ou un mélange aqueux. Pour des diluants solides hydrophobes, on choisira de préférence des solvants apolaires. Dans tous les cas, la solubilité du diluant solide dans le solvant de l'étape (b) est au moins égale à 0,5 % en poids à température ambiante (20 °C). De préférence, on peut mettre en oeuvre l'étape (b) à une température supérieure à la température ambiante et augmenter ainsi la solubilité du diluant solide (B) dans le solvant.

Le procédé de l'invention se distingue par sa grande flexibilité. En effet, il permet non seulement d'obtenir de manière ciblée la densité moyenne souhaitée pour le lit de matériau solide granulaire déposé, et par conséquent une perte de charge visée, mais également de préparer, sur mesure, des lits ayant un « profil de densité » particulier, adapté spécifiquement aux cinétiques réactionnelles ou permettant de résoudre des problèmes qui ne se présentent que dans certaines zones du lit de matériau granulaire.

Il peut ainsi être souhaitable, par exemple, de réduire la densité du lit dans la zone supérieure où des impuretés solides sont susceptibles de boucher le lit de catalyseur, tout en conservant une densité importante dans la zone inférieure du réacteur. Ainsi, il peut être intéressant de remplir le haut du réacteur avec une couche de catalyseur peu dense, c'est à dire diluée avec un diluant solide, puis de remplir le reste du réacteur avec une couche de catalyseur dense, c'est à dire non diluée avec un diluant solide.

Une autre application du procédé selon l'invention concerne des réacteurs où la viscosité du milieu réactionnel varie entre le haut et le bas du lit catalytique au fur et à mesure que la réaction progresse. L'écoulement du milieu réactionnel dans un tel réacteur pourrait être optimisé grâce à la combinaison de zones de différentes densités, c'est à dire d'un lit dense dans la zone où le milieu réactionnel est faiblement visqueux et d'un lit moins dense dans la zone où le milieu réactionnel est relativement plus visqueux.

Par conséquent, dans un mode de réalisation du procédé de la présente invention, l'enceinte est remplie sur une partie de sa hauteur avec un mélange de matériau solide granulaire (A) et de diluant solide (B), et sur l'autre partie de sa hauteur avec le matériau solide granulaire (A) non dilué par le diluant solide (B).

Bien entendu, on peut également envisager le chargement d'un lit fixe présentant un gradient de densité. On peut obtenir un tel lit à différentes densités en faisant varier graduellement au cours du chargement, dans l'étape (a), les fractions respectives du matériau solide granulaire (A) et du diluant solide (B) dans le mélange granulaire. Le gradient de composition ainsi obtenu se traduira, après dissolution du diluant solide (B) par un gradient de densité du lit.

Les différents modes de réalisation décrits ci-dessus (lit à densité homogène, lit à zone(s) dense(s) et zone(s) moins dense(s) et lit à gradient de densité) peuvent être mis en oeuvre par introduction, dans l'enceinte, d'un mélange, ou d'une série de mélanges différents, prét(s) à l'emploi contenant chacun une fraction déterminée de matériau solide granulaire (A) et de diluant solide (B).

La formation d'un lit comportant plusieurs zones de densités différentes et surtout d'un lit à gradient de densité se fait toutefois de préférence par préparation *in situ* d'un mélange de matériau solide granulaire (A) et de diluant solide (B) immédiatement avant ou pendant l'introduction du mélange dans l'enceinte.

Cette préparation *in situ* consiste à introduire un flux continu de diluant solide (B) provenant d'un doseur de solides particulaires, dans un flux de matériaux granulaires solides (A) provenant d'une trémie d'alimentation, puis à mélanger ces deux composants (A) et (B) au moyen de mélangeurs, de préférence de mélangeurs statiques appropriés.

La préparation *in situ* du mélange (A) + (B) peut se faire à l'aide d'un dispositif comprenant,
- un moyen de distribution (doseur) libérant en continu une quantité déterminée et contrôlée, fixe ou variable, d'un matériau solide granulaire (B),
- un moyen d'injection (injecteur) du flux de matériau solide granulaire (B) sortant dudit moyen de distribution dans le flux d'un deuxième solide granulaire (A), et
- un mélangeur permettant de mélanger les matériaux solides granulaires (A) et (B) jusqu'à obtention d'un mélange homogène.

Le dispositif permettant de mettre en oeuvre la préparation in situ du mélange de solide granulaire (A) et de diluant solide (B) est décrit en détail ci-dessous en référence aux dessins annexés dans lesquels :
- la figure 1 représente le schéma général d'un dispositif de préparation *in situ* du mélange (A) + (B), utilisé dans la présente invention ;
- la figure 2 représente un type de doseur utilisable dans le dispositif de la figure 1 ;
- la figure 3 représente un premier mode de réalisation d'un injecteur utilisable dans le dispositif de la figure 1 ;
- la figure 4 représente un deuxième mode de réalisation d'un injecteur utilisable dans le dispositif de la figure 1 ;
- la figure 5 représente un système de mélangeurs statiques utilisable dans le dispositif de la figure 1 ; et
- la figure 6 est un graphique montrant l'évolution de la perte de charge d'un lit de catalyseur en fonction du taux de dilution du solide granulaire (A) par le diluant solide (B).

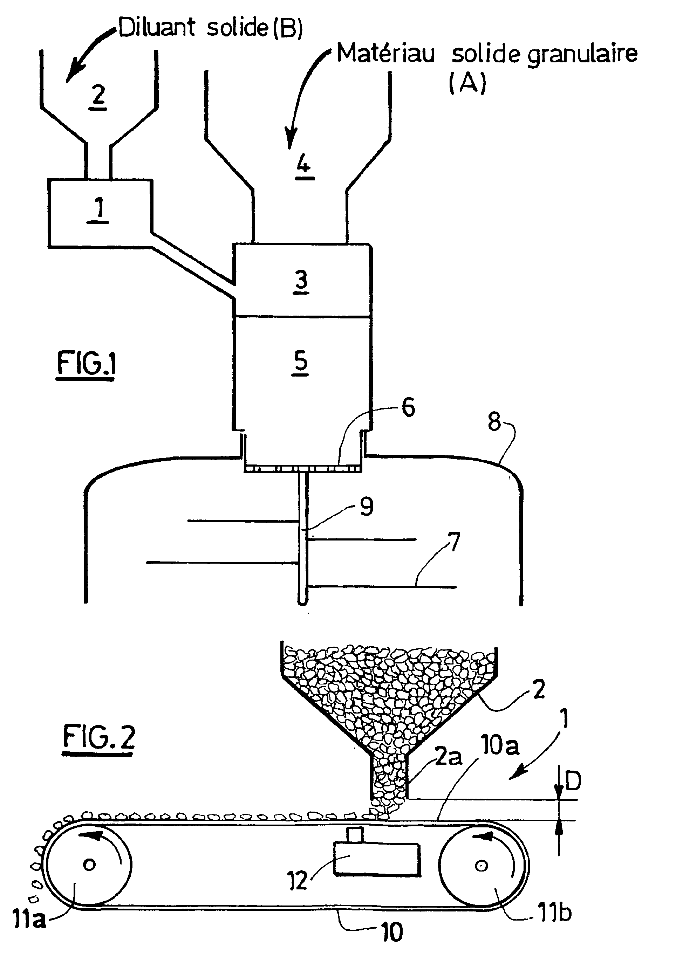

La figure 1 montre un dispositif de préparation, en flux continu, d'un mélange de deux solides granulaires (A) et (B) directement en amont du dispositif de chargement dense de ce mélange dans une enceinte. Le premier matériau solide granulaire (A), généralement un catalyseur granulaire, est introduit dans la trémie 4, et le deuxième matériau solide granulaire (B) (diluant solide) dans la trémie 2. La trémie 2 alimente un moyen de distribution (doseur) 1 conçu pour libérer une quantité déterminée, constante ou variable au cours du temps, de diluant solide (B). Le flux de diluant solide (B) distribué en continu par le doseur 1 est « injecté », au moyen d'un injecteur 3, dans le flux de matériau granulaire (A) provenant, sous l'effet de la gravité et de sa charge, de la trémie 4. Les deux flux ainsi réunis sont ensuite mélangés intimement en passant dans un mélangeur 5, de préférence une série de mélangeurs statiques. Le mélange homogène de solide granulaire (A) et de diluant solide (B) sortant du mélangeur 5 est ensuite introduit, par exemple à travers au moins un orifice 6, dans l'enceinte du réacteur 8 où un arbre 9, entraîné en rotation par un moyen moteur (non représenté) et portant un ou plusieurs déflecteurs 7, par exemple des lanières constituées d'un matériau souple de type caoutchouc, disperse les particules de solide granulaire (A) et de diluant solide (B) de manière à les déposer individuellement, en une pluie de grains, à la surface du lit fixe. Si les éléments 6, 7 et 9 permettent de garantir un bon chargement à effet de pluie, d'autres dispositifs connus dans la technique, peuvent être utilisés en association avec le procédé objet de la présente invention.

La Figure 2 montre un mode de réalisation d'un doseur 1 permettant de distribuer une quantité déterminée de solide particulaire (diluant solide (B)) et de faire varier de manière contrôlée cette quantité.

Le doseur 1 est constitué d'une courroie d'entraînement sans fin 10, mue par un ensemble de poulies 11a, 11b, et d'une trémie 2 disposée immédiatement au-dessus de la courroie 10 à proximité d'une des poulies 11b. La distance D entre l'extrémité inférieure de la cheminée d'évacuation 2a de la trémie 2 et la partie supérieure 10a de la courroie 10 est comprise entre 1 à 10 fois le diamètre du diluant solide (B) et de préférence entre 1 à 3 fois. Cette partie supérieure de la courroie est en contact avec un vibreur 12 à amplitude et fréquence de vibrations réglables. Les variations de la distance D, de la vitesse de rotation de la courroie 10 et de l'amplitude et/ou de la fréquence de vibration du vibreur permettent ainsi de faire varier avec une grande flexibilité le débit de diluant solide (B) sortant de la trémie 2 et emporté par la bande transporteuse. A l'extrémité de la courroie 10 opposée à la trémie 2, le diluant solide (B) est recueilli et amené vers l'injecteur.

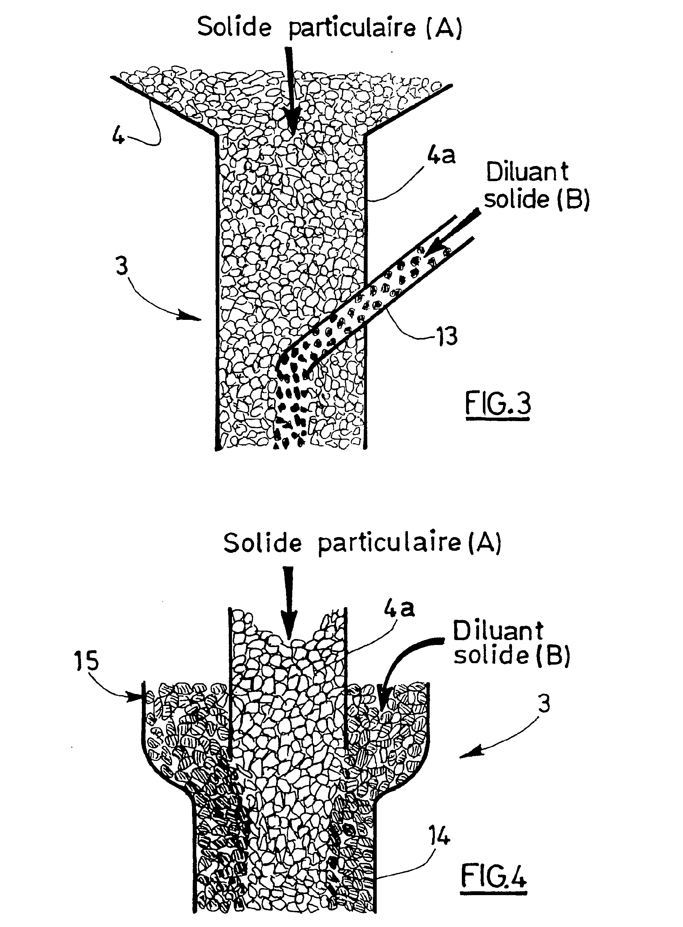

La figure 3 montre un premier mode de réalisation d'un injecteur utilisable pour la préparation *in situ* (ou *in process*) d'un mélange de deux solides granulaires. Dans ce premier mode de réalisation, l'injecteur 3 est formé par un conduit fin 13 traversant la paroi de la cheminée d'évacuation 4a de la trémie 4 contenant le solide granulaire (A) et débouchant, de préférence, dans la zone centrale de cette cheminée d'évacuation remplie par le solide granulaire (A). Le flux de diluant solide (B) arrivant du doseur 1 (non représenté) via le conduit fin 13 est ainsi introduit au coeur du flux de solide granulaire (A) afin d'être mélangé à celui-ci dans une étape consécutive.

La figure 4 montre un deuxième mode de réalisation d'un injecteur destiné à introduire le flux de diluant solide (B) dans le flux de solide granulaire (A). Cet injecteur 3 est formé par une cheminée 14 évasée dans sa partie supérieure. La cheminée d'évacuation 4a de la trémie 4 contenant le solide granulaire (A) débouche dans la partie supérieure évasée de la cheminée 14 à un niveau inférieur au bord supérieur 15 de la cheminée 14. Le diluant solide (B) est introduit dans le flux de solide granulaire (A) par l'espace entre la cheminée d'évacuation 4a de la trémie et le bord supérieur 15 évasé de la cheminée 14, et est entraîné par le flux de solide granulaire (A) qui descend sous l'effet de la gravité vers le mélangeur (non représenté) situé en aval de l'injecteur 3. Contrairement au mode de réalisation de la figure 3, le diluant solide (B) est ici introduit dans la partie périphérique du flux de solide granulaire (A) et non pas dans la partie centrale de celui-ci.

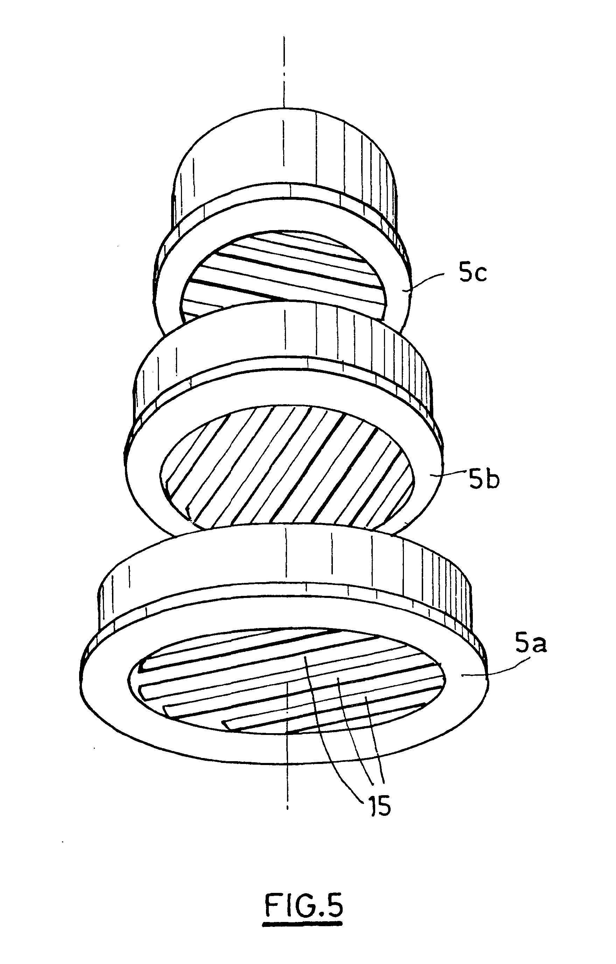

Enfin, la figure 5 représente un ensemble de mélangeurs statiques 5a, 5b, 5c. Chaque mélangeur statique comporte une pluralité de parois 15 obliques, de préférence parallèles les unes aux autres, définissant entre elles des espaces obliques par lesquels les grains du mélange de solide granulaire (A) et de diluant solide (B) transitent sous l'effet de la gravité. La combinaison de plusieurs mélangeurs disposés de manière à ce que les plans définis par les parois obliques 15 d'un premier mélangeur 5c coupent ceux définis par les parois obliques d'un deuxième mélangeur 5b disposé en dessous du premier mélangeur 5c, a un effet de mélangeage et d'homogénéisation du flux de particules (A) et (B). D'autres mélangeurs statiques ou éléments mélangeurs statiques empilables sont connus dans la technique et peuvent être utilisés dans la mesure où ils assurent une homogénéisation satisfaisante des deux solides particulaires.

### Exemple 1

### Effet de la fraction de diluant solide sur la perte de charge d'un lit de catalyseur particulaire

On prépare une série de 4 mélanges de gros sel de cuisine (diluant solide) et d'un catalyseur commercial KF756 (à base de cobalt, de molybdène et d'alumine, utilisé pour l'hydrotraitement des charges pétrolières) commercialisé par la société Akzo Nobel, obtenu après régénération. Ce catalyseur régénéré est de forme quadrilobaire avec un diamètre de 1,3 mm et une longueur moyenne de 2,4 mm. Pour cela, on ajoute à 180 ml, 300 ml, 600 ml et 900 ml (volume apparent avant mélange) de gros sel respectivement 5,8 litres, 5,7 litres, 5,4 litres et 5,1 litres (volume apparent avant mélange) de catalyseur, puis on fait passer chacun des mélanges dans un homogénéisateur jusqu'à obtention d'un mélange qui apparaît homogène à l'oeil nu.

On remplit une colonne contenant une première couche de grosses billes avec le mélange catalyseur/sel selon une technique de chargement dense, on couvre le lit ainsi obtenu avec une deuxième couche de billes, puis on élue lentement avec de l'eau jusqu'à dissolution totale du sel. On sèche le lit de catalyseur formé en faisant passer pendant 6 à 7 heures de l'air à température ambiante à un débit inférieur à 10 Nm³/h. On traite de la même manière un catalyseur « non dilué », c'est-à-dire ne contenant pas de sel en tant que diluant solide.

On mesure pour chacun de ces cinq lits de catalyseur (taux de dilution : 0 %, 3 %, 5 %, 10 % et 15 %) la perte de charge à différents débits d'air (allant de 2 à 8 Nm³/h), puis on calcule, pour chaque débit d'air et pour chaque taux de dilution, le rapport de la perte de charge du lit ainsi allégé à la perte de charge du lit dense (0 % de dilution).

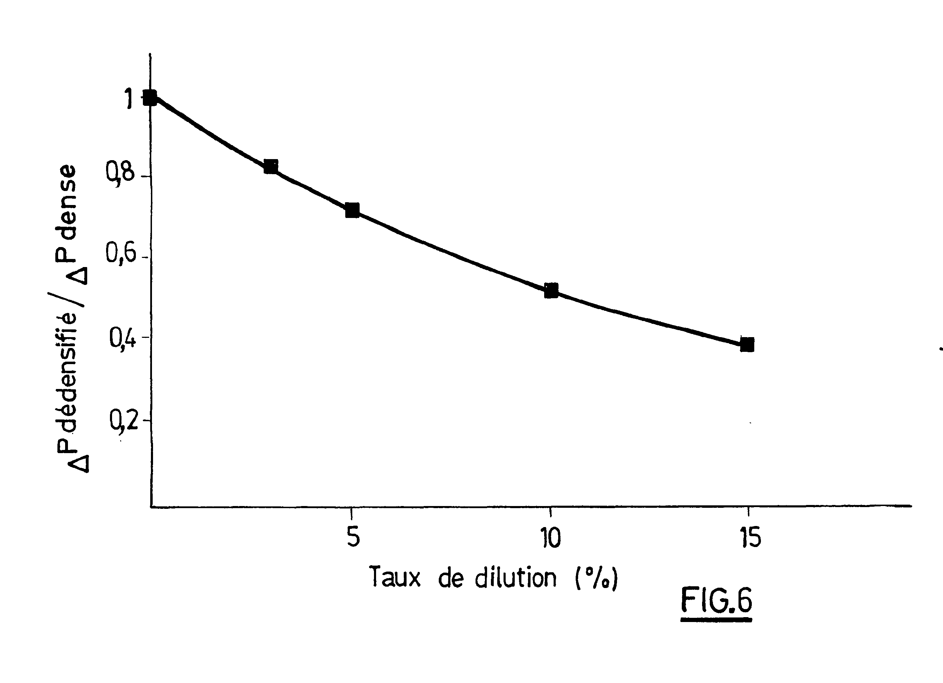

La figure 6 montre l'évolution de la valeur moyenne (sur l'ensemble des différents débits d'air) de ce rapport en fonction du taux de dilution du catalyseur. On constate que ce rapport, égal à 1 pour un taux de dilution de 0 %, diminue progressivement lorsque le taux de dilution du lit de catalyseur augmente. La pente de cette courbe, c'est-à-dire la perte de ΔP par % de dilution, est plus importante pour les faibles taux de dilution. On constate ainsi que pour un taux de dilution de seulement 3 % en volume, la perte de charge du lit de particules diminue de près de 20 %.

Cet exemple montre que le procédé selon l'invention permet de moduler de manière ciblée la densité d'un lit de catalyseur déposé selon une technique de chargement dense et donc ainsi, de moduler la perte de charge. Le procédé selon l'invention peut être avantageusement un procédé de chargement, dans une enceinte, de lits absorbants de type alumine, charbon actif, ou encore de type tamis moléculaire. Il pourra également être mis en oeuvre pour le chargement d'un lit catalytique dans un réacteur chimique dans lequel la charge à traiter circule à contre-courant du composant réactif.

## Revendications

1. Procédé pour remplir une enceinte avec un matériau solide granulaire à une densité de chargement modulable, comprenant les étapes suivantes consistant
(a) à remplir ladite enceinte avec un mélange d'un premier matériau solide granulaire (A) et d'un diluant solide (B), qui est un deuxième matériau solide granulaire, ayant des propriétés de solubilité différentes du premier matériau solide granulaire (A), et
(b) à éliminer la totalité du diluant solide (B) et à ne laisser dans l'enceinte que le premier matériau solide granulaire (A), en faisant passer par le lit fixe déposé dans l'étape (a) un solvant ayant un pouvoir dissolvant nul pour le premier matériau solide granulaire (A) et un pouvoir dissolvant élevé pour le second matériau solide granulaire (B).

2. Procédé selon la revendication 1, **caractérisé par le fait que** le taux de dilution du premier matériau solide granulaire (A) par le diluant solide (B), c'est-à-dire le rapport volumique V(A)/(V(A)+V(B)) dans le mélange de l'étape (a), est compris entre 1 % et 30 % en volume, de préférence entre 2 et 20 % en volume et en particulier entre 3 et 15 % en volume.

3. Procédé selon les revendications 1 et 2, **caractérisé par le fait que** le mélange de matériau solide granulaire (A) et de diluant solide (B) est préparé *in situ*, immédiatement avant ou pendant l'introduction du mélange dans l'enceinte.

4. Procédé selon la revendication 3, **caractérisé par le fait que** la préparation *in situ* du mélange est obtenue par introduction d'un flux continu de diluant solide (B) dans un flux de matériau granulaire solide (A) puis par mélange de ces deux composants (A) et (B).

5. Procédé selon la revendication 4, **caractérisé par le fait que** le diluant solide (B) provient d'un doseur de solides particulaires.

6. Procédé selon la revendication 4, **caractérisé par le fait que** le matériau granulaire solide (A) provient d'une trémie d'alimentation.

7. Procédé selon la revendication 4, **caractérisé par le fait que** le mélange des deux composants (A) et (B) est réalisé au moyen de mélangeurs, de préférence de mélangeurs statiques appropriés.

8. Procédé selon l'une quelconque des revendications précédentes, **caractérisé par le fait que** le procédé de remplissage de l'enceinte en un mélange des deux matériaux solides (A et B) est du type chargement à l'aide d'une manche ou, de préférence, à effet de pluie.

9. Procédé selon la revendication 8, **caractérisé par le fait que** le chargement à effet de pluie est obtenu par un dispositif constitué d'un axe central tournant, plein ou creux, sur lequel sont disposées et également réparties à différents niveaux, des lanières souples qui s'écartent dudit axe suivant la vitesse de rotation de celui-ci.

10. Procédé selon l'une quelconque des revendications précédentes, **caractérisé par le fait que** le matériau solide granulaire (A) a un diamètre moyen compris entre 0,6 et 12 mm, de préférence entre 0,7 et 8 mm et en particulier entre 0,8 et 3 mm.

11. Procédé selon l'une quelconque des revendications précédentes, **caractérisé par le fait que** le rapport du diamètre moyen du matériau solide granulaire (A) au diamètre moyen du diluant solide (B) est compris entre 0,1 et 10, de préférence entre 0,2 et 5 et en particulier entre 0,9 et 1,1.

12. Procédé selon l'une quelconque des revendications précédentes, **caractérisé par le fait que** l'enceinte est un réacteur chimique et que le matériau solide granulaire (A) est un catalyseur.

13. Procédé selon la revendication 12, **caractérisé par le fait que** le catalyseur est un catalyseur à base d'alumine et/ou de silice supportant un ou plusieurs métaux.

14. Procédé selon la revendication 12 ou 13, **caractérisé par le fait que** le catalyseur est un catalyseur recyclé ou régénéré ayant une longueur moyenne inférieure à 3,2 mm, et de préférence à 2,7 mm.

15. Procédé selon l'une quelconque des revendications précédentes **caractérisé par le fait que** le diluant solide est choisi dans le groupe formé par les paraffines, les polymères synthétiques ou naturels, les sels organiques ou minéraux, les sucres monomères, oligomères ou polymères et des mélanges de ceux-ci.

16. Procédé selon l'une quelconque des revendications 12 à 15, **caractérisé par le fait que** le diluant solide est choisi de manière à pouvoir être dissous par le milieu réactionnel liquide circulant dans le réacteur.

17. Procédé selon l'une quelconque des revendications précédentes, **caractérisé par le fait que**, dans l'étape (a), l'enceinte est remplie sur une partie de sa hauteur avec un mélange de matériau solide granulaire (A) et de diluant solide (B), et sur l'autre partie de sa hauteur avec le matériau solide granulaire (A) non dilué par le diluant solide (B).

18. Procédé selon l'une des revendications 1 à 16, **caractérisé par le fait que**, dans l'étape (a), les fractions respectives du matériau solide granulaire (A) et du diluant (B) dans le mélange varient au cours du chargement, de manière à donner un lit fixe présentant un gradient de composition.

19. Procédé selon l'une quelconque des revendications précédentes, **caractérisé par le fait que** l'on introduit dans l'enceinte un mélange, ou une série de mélanges différents, prêt(s) à l'emploi contenant une fraction déterminée de matériau solide granulaire (A) et de diluant solide (B).

20. Procédé selon l'une quelconque des revendications précédentes, dans lequel le matériau solide granulaire est un matériau absorbant de type alumine, charbon actif ou tamis moléculaire.

21. Procédé selon l'une quelconque des revendications précédentes, dans lequel l'enceinte est un réacteur dans lequel la charge à traiter circule à contre-courant ou à co-courant du composant réactif.

## Claims

1. A method for filling a chamber with a granular solid material at an adjustable loading density, comprising the following steps consisting in:
(a) filling said chamber with a mixture of a first granular solid material (A) and a solid diluent (B), which is a second granular solid material, having different solubility properties from the first granular solid material (A); and
(b) removing all of the solid diluent (B) and leaving only the first granular solid material (A) in the chamber, by passing through the fixed bed deposited in step (a), a solvent having a zero ability to dissolve the first granular solid material (A) and a strong ability to dissolve the second granular solid material (B).

2. The method as claimed in claim 1, **characterized in that** the degree of dilution of the first granular solid material (A) by the solid diluent (B), that is to say the V_{(A)}/(V_{(A)}+V_{(B))} volume ratio in the mixture from step (a), is between 1% and 30% by volume, preferably between 2 and 20% by volume and in particular between 3 and 15% by volume.

3. The method as claimed in claims 1 and 2, **characterized in that** the mixture of the granular solid material (A) and the solid diluent (B) is prepared *in situ*, immediately before or during the introduction of the mixture into the chamber.

4. The method as claimed in claim 3, **characterized in that** the *in situ* preparation of the mixture is obtained by introducing a continuous flow of solid diluent (B) into a flow of solid granular material (A) then by mixing these two components (A) and (B).

5. The method as claimed in claim 4, **characterized in that** the solid diluent (B) comes from a particulate solids metering device.

6. The method as claimed in claim 4, **characterized in that** the granular solid material (A) comes from a feed hopper.

7. The method as claimed in claim 4, **characterized in that** the mixing of the two components (A) and (B) is carried out using mixers, preferably suitable static mixers.

8. The method as claimed in any one of the preceding claims, **characterized in that** the method for filling the chamber with a mixture of the two solid materials (A) and (B) is of the type with loading using a sock or preferably with rain-effect loading.

9. The method as claimed in claim 8, **characterized in that** the rain-effect loading is obtained via a device consisting of a rotating, solid or hollow, central shaft, onto which flexible strips are placed and also distributed at various levels, which diverge from said shaft according to the rotation speed of the shaft.

10. The method as claimed in any one of the preceding claims, **characterized in that** the granular solid material (A) has an average diameter between 0.6 and 12 mm, preferably between 0.7 and 8 mm and in particular between 0.8 and 3 mm.

11. The method as claimed in any one of the preceding claims, **characterized in that** the ratio of the average diameter of the granular solid material
(A) to the average diameter of the solid diluent
(B) is between 0.1 and 10, preferably between 0.2 and 5 and in particular between 0.9 and 1.1.

12. The method as claimed in any one of the preceding claims, **characterized in that** the chamber is a chemical reactor and the granular solid material (A) is a catalyst.

13. The method as claimed in claim 12, **characterized in that** the catalyst is a catalyst based on alumina and/or silica bearing one or more metals.

14. The method as claimed in claim 12 or 13, **characterized in that** the catalyst is a recycled or regenerated catalyst having an average length of less than 3.2 mm, and preferably less than 2.7 mm.

15. The method as claimed in any one of the preceding claims, **characterized in that** the solid diluent is chosen from the group formed by paraffins, synthetic or natural polymers, organic or mineral salts, monomeric, oligomeric or polymeric sugars and mixtures thereof.

16. The method as claimed in any one of claims 12 to 15, **characterized in that** the solid diluent is chosen so as to be able to be dissolved by the liquid reaction medium circulating in the reactor.

17. The method as claimed in any one of the preceding claims, **characterized in that**, in step (a), the chamber is filled to one part of its height with a mixture of granular solid material (A) and solid diluent (B), and to the other part of its height with the granular solid material (A) that is not diluted by the solid diluent (B).

18. The method as claimed in one of claims 1 to 16, **characterized in that**, in step (A), the respective fractions of the granular solid material (A) and of the diluent (B) in the mixture vary during loading, so as to give a fixed bed having a composition gradient.

19. The method as claimed in any one of the preceding claims, **characterized in that** a mixture, or a series of different mixtures, that are ready to be used, containing a determined fraction of granular solid material (A) and solid diluent (B) are introduced into the chamber.

20. The method as claimed in any one of the preceding claims, in which the granular solid material is an absorbent material of the alumina, activated carbon or molecular sieve type.

21. The method as claimed in any one of the preceding claims, in which the chamber is a reactor in which the charge to be treated flows countercurrently or cocurrently to the reactive component.

## Patentansprüche

1. Verfahren zum Befüllen eines Behälters mit kornförmigem festen Material mit einer modulierbaren Ladungsdichte, das die folgenden Schritte enthält, die bestehen in
(a) Füllen des Behälters mit einer Mischung aus einem ersten kornförmigem festen Material (A) und einem festen Streckmittel (B), das ein zweites kornförmigem festes Material ist, das Eigenschaften der Löslichkeit aufweist, die von dem ersten kornförmigem festen Material (A) verschieden sind, und
(b) Beseitigen der Gesamtheit des festen Streckmittels (B) und Belassen nur des ersten kornförmigem festen Materials (A) in dem Behälter durch Hindurchtretenlassen durch das in dem Schritt (a) abgelagerte Festbett eines Lösungsmittels, das ein Lösungsvermögen von Null für das erste kornförmige feste Material (A) und ein hohes Lösungsvermögen für das zweite kornförmige feste Material (B) hat.

2. Verfahren gemäß Anspruch 1, **dadurch gekennzeichnet, dass** der Streckungsgrad des ersten kornförmigem festen Materials (A) durch das Streckmittel (B), das heißt das Volumenverhältnis V(A) / (V(A)+V(B)) in der Mischung in Schritt (a) zwischen 1 Vol.-% und 30 Vol.-% liegt, vorzugsweise zwischen 2 und 20 Vol.-% und insbesondere zwischen 3 und 15 Vol.-%.

3. Verfahren gemäß Anspruch 1 oder 2, **dadurch gekennzeichnet, dass** die Mischung aus dem kornförmigem festen Material (A) und dem festen Streckmittel (B) unmittelbar vor oder während des Einbringens der Mischung in den Behälter in situ bereitet wird.

4. Verfahren gemäß Anspruch 3, **dadurch gekennzeichnet, dass** das Bereiten der Mischung in situ erzielt wird durch Einbringen eines kontinuierlichen Flusses des festen Streckmittels (B) in einen Fluss des kornförmigem festen Materials (A) und dann durch Mischung der beiden Komponenten (A) und (B).

5. Verfahren gemäß Anspruch 4, **dadurch gekennzeichnet, dass** das feste Streckmittel (B) aus einem Dosierer für kornförmige Feststoffe kommt.

6. Verfahren gemäß Anspruch 4, **dadurch gekennzeichnet, dass** das kornförmige feste Material (A) aus einem Zuführtrichter kommt.

7. Verfahren gemäß Anspruch 4, **dadurch gekennzeichnet, dass** die Mischung der beiden Komponenten (A) und (B) mit Hilfe von Mischern verwirklicht wird, vorzugsweise geeigneten statischen Mischern.

8. Verfahren gemäß einem der vorigen Ansprüche, **dadurch gekennzeichnet, dass** das Verfahren des Befüllens des Behälters mit einer Mischung der zwei festen Materialien (A und B) vom Typ einer Beladung mit Hilfe einer Hülse oder vorzugsweise mit Regeneffekt ist.

9. Verfahren gemäß Anspruch 8, **dadurch gekennzeichnet, dass** die Beladung mit Regeneffekt durch eine Vorrichtung erzielt wird, die aus einer zentralen vollen oder hohlen Drehachse gebildet ist, an der nachgiebige Riemen angeordnet und auf unterschiedlichen Höhen verteilt sind, die von dieser Achse aus je nach deren Drehgeschwindigkeit abgelenkt werden.

10. Verfahren gemäß einem der vorigen Ansprüche, **dadurch gekennzeichnet, dass** das kornförmige feste Material (A) einen mittleren Durchmesser hat, der zwischen 0,6 und 12 mm liegt, vorzugsweise zwischen 0,7 und 8 mm und insbesondere zwischen 0,8 und 3 mm.

11. Verfahren gemäß einem der vorigen Ansprüche, **dadurch gekennzeichnet, dass** das Verhältnis aus dem mittleren Durchmesser des kornförmigen festen Materials (A) zu dem mittleren Durchmesser des festen Streckmittels (B) zwischen 0,1 und 10 liegt, vorzugsweise zwischen 0,2 und 5 und insbesondere zwischen 0,9 und 1,1.

12. Verfahren gemäß einem der vorigen Ansprüche, **dadurch gekennzeichnet, dass**
der Behälter ein chemischer Reaktor ist und dass das kornförmige feste Material (A) ein Katalysator ist.

13. Verfahren gemäß Anspruch 12, **dadurch gekennzeichnet, dass** der Katalysator ein Katalysator auf der Basis von Aluminiumoxid und/oder Siliziumdioxid ist, der ein oder mehrere Metalle trägt.

14. Verfahren gemäß Anspruch 12 oder 13, **dadurch gekennzeichnet, dass** der Katalysator ein wiederverwerteter oder regenerierter Katalysator ist, der eine mittlere Länge von weniger als 3,2 mm und vorzugsweise als 2,7 mm hat.

15. Verfahren gemäß einem der vorigen Ansprüche, **dadurch gekennzeichnet, dass** das feste Streckmittel gewählt ist aus einer Gruppe, die gebildet ist durch die Paraffine, die synthetischen oder natürlichen Polymere, die organischen oder mineralischen Salze, die monomerem, oligomeren oder polymeren Zucker und durch Mischungen aus diesen.

16. Verfahren gemäß einem der Ansprüche 12 bis 15, **dadurch gekennzeichnet, dass** das feste Streckmittel so gewählt ist, dass es durch das flüssige reaktive Medium gelöst werden kann, das in dem Reaktor zirkuliert.

17. Verfahren gemäß einem der vorigen Ansprüche, **dadurch gekennzeichnet, dass** in dem Schritt (a) der Behälter über einen Abschnitt seiner Höhe mit einer Mischung aus dem kornförmigem festen Material (A) und dem festen Streckmittel (B) gefüllt wird und über einen anderen Abschnitt seiner Höhe mit dem kornförmigem festen Material (A), das nicht mit dem festen Streckmittel (B) verdünnt ist.

18. Verfahren gemäß einem der Ansprüche 1 bis 16, **dadurch gekennzeichnet, dass** in dem Schritt (a) die jeweiligen Fraktionen des kornförmigen festen Materials (A) und des Streckmittels (B) in der Mischung sich im Verlauf der Beladung ändern, um ein Festbett zu liefern, das einen Gradienten der Zusammensetzung aufweist.

19. Verfahren gemäß einem der vorigen Ansprüche, **dadurch gekennzeichnet, dass** in den Behälter eine Mischung oder eine Serie von verschiedenen Mischungen eingebracht wird, die gebrauchsfertig ist (sind) und eine vorbestimmte Fraktion des kornförmigen festen Materials (A) und des festen Streckmittels (B) enthalten.

20. Verfahren gemäß einem der vorigen Ansprüche, bei dem das kornförmige feste Material ein absorbierendes Material vom Typ Aluminiumoxid, Aktivkohle oder Molekülsieb ist.

21. Verfahren gemäß einem der vorigen Ansprüche, bei dem der Behälter ein Reaktor ist, in dem die zu behandelnde Ladung entgegen oder mit der Strömung der reaktiven Komponente zirkuliert.
